# EUROPÄISCHE PATENTSCHRIFT

(11) **EP 0 935 825 B1**
(45) Veröffentlichungstag und Bekanntmachung des Hinweises auf die Patenterteilung: **28.05.2003**
(21) Anmeldenummer: 98914780.6
(22) Anmeldetag: 18.02.1998
(51) Int. Cl.: H01Q 3/14, H01Q 19/06, H01Q 1/32, G01S 13/93, G01S 7/03

(54) **KRAFTFAHRZEUG-RADARSENSOR**
RADAR SENSOR FOR A VEHICLE
CAPTEUR-RADAR POUR VEHICULE

(30) Priorität: 10.05.1997 DE 19719764
(43) Veröffentlichungstag der Anmeldung: 18.08.1999
(73) Patentinhaber: ROBERT BOSCH GMBH, 70442 Stuttgart (DE)
(72) Erfinder: WAGNER, Klaus-Peter, D-70193 Stuttgart (DE)
(86) Internationale Anmeldenummer: DE9800481
(87) Internationale Veröffentlichungsnummer: WO98052247

(56) Entgegenhaltungen:
- DE-A- 4 412 770
- DE-C- 19 642 810
- US-A- 2 895 131
- US-A- 3 713 163
- US-A- 4 243 991

## Beschreibung

### Stand der Technik

Die vorliegende Erfindung betrifft einen Kraftfahrzeug-Radarsensor gemäß dem Oberbegriff des Hauptanspruchs. Ein solcher Radarsensor ist beispielsweise aus der WO97/02496 bekannt. In dieser Schrift wird ein monostatischer FMCW-Radarsensor für ein Fahrzeug zur Detektion von Objekten vorgeschlagen, bei dem wenigstens ein Antennenfeed in Verbindung mit einer dielektrischen Linse sowohl zum Senden als auch zum Empfangen eines entsprechenden Echosignals ausgebildet ist. Ein in einem Ausführungsbeispiel beschriebener Radarsensor weist drei Antennenfeeds auf, die in diesem Fall als sogenannte Patchantennen ausgeführt sind. Jedes dieser Antennenfeeds ist mit einer nachfolgenden Signalverarbeitungsschaltung verbunden. In Verbindung mit einer gemeinsamen dielektrischen Linse bilden die drei Antennenfeeds drei ausgeprägte Antennenkeulen aus, aufgrund derer es möglich ist, eine Winkellage detektierter Radarziele zu bestimmen. Zur Bestimmung einer horizontalen Winkellage, wie sie für die genannte Anwendung benötigt wird, sind die Antennenfeeds entlang einer horizontalen Geraden in gleichmäßigen Abständen zueinander angeordnet.

Schwierigkeiten ergeben sich nun bei der Applikation eines solchen Radarsensors an unterschiedliche Fahrzeugtypen. Je nach den vorhandenen Platzverhältnissen an einem Fahrzeug kann es notwendig sein, den Radarsensor, der selbst in einem kompakten Gehäuse untergebracht ist, in unterschiedlichen Einbaulagen zu montieren. Gleichzeitig müssen jedoch die genannten Antennenfeeds zur Bestimmung einer horizontalen Winkellage exakt horizontal hinter ihrer gemeinsamen dielektrischen Linse angeordnet sein. Dies erfordert bei einer veränderten Einbaulage des Radarsensors an einem Kraftfahrzeug eine zumindest teilweise Neukonstruktion der Anordnung der Antennenfeeds in dem Gehäuse des Radarsensors.

Die DE 44 12 770 A1 beschreibt eine Mikrowellen-Linsenanordnung für ein Kraftfahrzeug-Abstandswarnradar, bei der in der Brennebene einer dielektrischen Stufenlinse drei horizontal nebeneinander angeordnete, getrennt einschaltbare Erreger vorgesehen sind. Der Versatz der Erreger aus der Mittelachse bestimmt die die Auslenkung der von ihnen erzeugten Strahlungskeulen. Vorteilhafterweise sind die drei Erreger so ausgelegt und/oder angeordnet, daß eine 45-Grad-Linearpolarisation entsteht.

Die US 3,713,163 offenbart eine Antenne, die eine Mehrzahl von Strahlungskeulen durch ein fokussierendes Mittel mit einer einzigen Antennenachse sendet. Jede Strahlungskeule wird durch ein Erregerarray erzeugt, wovon jedes aus mehreren, geradlinig angeordneten Antennenelementen besteht, die zur Antennenachse versetzt sind und so angeordnete sind, daß sie sich in etwa im Brennpunkt des fokussierenden Mittels befinden. Jedes der Arrays ist unabhängig von den anderen um die Antennenachse rotierbar.

### Aufgabe, Lösung und Vorteile der Erfindung

Ziel der vorliegenden Erfindung ist es dementsprechend, einen mehrstrahligen, in einem kompakten Gehäuse untergebrachten Radarsensor anzugeben, der einfach und kostengünstig an unterschiedlich Einbauumgebungen, insbesondere an unterschiedliche Einbaulagen applizierbar ist.

Erfindungsgemäß wird diese Aufgabe dadurch gelöst, daß bei einem gattungsgemäßen Radarsensor mindestens ein weiteres Antennenfeed vorhanden ist, welches so angeordnet ist, daß entlang einer weiteren Geraden mindestens eine weitere Reihe von Antennenfeeds gebildet wird, wobei diese weitere Reihe durch eine Drehung um einen angenommenen Drehpunkt kongruent auf die erste Reihe von Antennenfeeds abbildbar ist. Vorteilhafte Weiterbildungen der Erfindung ergeben sich aus den untergeordneten Ansprüchen sowie den nachfolgend beschriebenen Ausführungsbeispielen.

Vorteil eines erfindungsgemäßen Radarsensors ist, daß eine Applikation des Sensors an unterschiedliche Einbauumgebungen, insbesondere an unterschiedliche Einbaulagen sehr einfach und sehr kostengünstig möglich ist. Gleichzeitig ist die Erfindung selbst sehr einfach und kostengünstig zu realisieren, insbesondere wenn als Antennenfeeds wie in dem oben beschriebenen Radarsensor Patchantennen zum Einsatz kommen. Da solche Patchantennen mit Hilfe allgemein bekannter Verfahren als Leiterstruktur auf einer Trägerplatine hergestellt werden, ist im wesentlichen nur eine Änderung oder Anpassung des entsprechenden Layouts der Trägerplatine erforderlich. Darüber hinaus kann das Gehäuse des Radarsensors selbst ohne Berücksichtigung einer notwendigen Einbaulage optimiert werden. Dies erleichtert die ohnehin schwierige Konstruktion eines solchen kompakten Radarsensors.

### Beschreibung von Ausführungsbeispielen

Nachfolgend werden Ausführungsbeispiele der Erfindung anhand einer Zeichnung erläutert. Es zeigen
Figur 1 eine schematische Darstellung eines Radarsensors gemäß dem Stand der Technik,
Figur 2 eine schematische Darstellung eines erfindungsgemäßen Radarsensors,
Figur 3 eine schematische Darstellung eines weitergebildeten erfindungsgemäßen Radarsensors und
Figur 4 eine Anordnung von Patchelementen zur Erläuterung weiterer Ausgestaltungen der Erfindung.

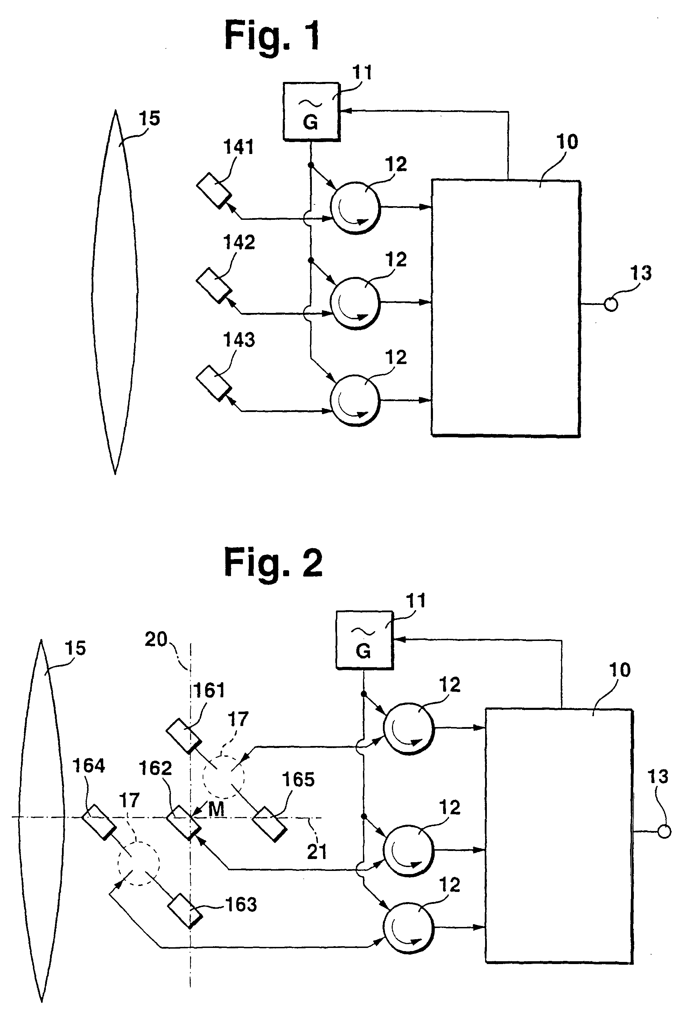

Figur 1 zeigt eine schematische Darstellung eines Radarsensors gemäß dem oben genannten Stand der Technik. Demnach sind drei Antennenfeeds 141, 142 und 143, die in diesem Fall als Patchelemente ausgeführt sind, über jeweils eine Sende/Empfangsweiche 12 mit einer Auswerte- und Steuereinrichtung 10 verbunden. Die Auswerte- und Steuereinrichtung 10 umfaßt dabei alle im folgenden nicht anderweitig genannten Signalverarbeitungsschaltkreise, die ein gattungsgemäßer Radarsensor benötigt. Ein steuerbarer Schwingungserzeuger 11 wird in seiner Frequenz von der Auswerte- und Steuereinrichtung 10 angesteuert und ist an seinem Ausgang mit jeder der drei Sende/Empfangsweichen 12 verbunden. Dieser schematische Aufbau beschreibt die Struktur eines dreistrahligen FMCW-Radarsensors. Die Erfindung ist jedoch nicht auf diese Grundstruktur eingeschränkt. Sie kann ebenso auf beliebig mehrstrahlige und darüber hinaus auch auf Pulsradarsysteme angewendet werden. Ebenso spielt es keine Rolle, ob der Radarsensor die Antennenfeeds gleichzeitig oder sequentiell zueinander verwendet. Die Ausführung der Antennenfeeds als Patchelemente ist hinsichtlich der sehr einfachen Herstellung vorteilhaft, sie ist jedoch keine notwendige Voraussetzung zur Realisierung der Erfindung. Ebenso können die Antennenfeeds beispielsweise als Hornstrahler ausgeführt sein. Vor den Antennenfeeds 141 bis 143 ist eine gemeinsame dielektrische Linse 15 angeordnet, die als fokussierendes Mittel dient. Auch sie kann, ohne das Wesen der Erfindung zu verändern, beispielsweise durch einen Reflektor ersetzt werden. An einem Ausgang 13 stellt der Radarsensor die von ihm ermittelten Daten oder Meßwerte weiteren Baugruppen zur Verfügung. Im Rahmen einer automatischen Hinderniserkennung in einem Fahrzeug sind dies beispielsweise eine Warneinrichtung oder ein Regler zur automatischen Regelung der Geschwindigkeit des Fahrzeugs. Gemäß dem Stand der Technik ist der Radarsensor in einem kompakten, hier jedoch nicht dargestellten Gehäuse untergebracht.

Figur 2 zeigt ein erstes Ausführungsbeispiel der Erfindung. Es geht von dem in Figur 1 beschriebenen Radarsensor gemäß dem Stand der Technik aus und umfaßt demzufolge in der bereits beschriebenen Anordnung eine Auswerte- und Steuereinrichtung 10, einen Schwingungserzeuger 11, drei Sende/Empfangsweichen 12, eine dielektrische Linse 15 und einen Ausgang 13 der Auswerte- und Steuereinrichtung 10. Erfindungsgemäß sind hier jedoch nun fünf Antennenfeeds 161, 162, 163, 164 und 165 vorhanden. Die Antennenfeeds 161 bis 163 sind wie in Figur 1 entlang einer ersten Geraden 20 angeordnet und bilden eine erste Reihe von Antennenfeeds. Die Antennenfeeds 164 und 165 sind erfindungsgemäß entlang einer zweite Geraden 21 angeordnet und bilden gemeinsam mit dem Antennenfeed 162 eine zweite Reihe von Antennenfeeds. Dabei stehen die Geraden 20 und 21 in diesem Ausführungsbeispiel senkrecht zueinander. Jede der beiden Reihen von Antennenfeeds ist durch eine Drehung um einen Drehpunkt M kongruent auf die jeweils andere Reihe von Antennenfeeds abbildbar. Gemäß einer bevorzugten Ausgestaltung der Erfindung ist die Anordnung der Antennenfeeds 161 bis 165 dabei so, daß das Antennenfeed 162 mittig auf diesem Drehpunkt M liegt und dementsprechend beiden Reihen von Antennenfeeds zugehört. Diese erfindungsgemäße Anordnung von Antennenfeeds ermöglicht es, den Radarsensor in zwei unterschiedlichen Einbau-lagen an einem Kraftfahrzeug zu montieren und dabei trotzdem zu gewährleisten, daß eine Reihe von Antennenfeeds horizontal angeordnet ist. Jeweils zwei der insgesamt fünf Antennenfeeds werden dann im Betrieb des Radarsensors nicht benötigt. Je nach der gewählten Einbaulage sind dies entweder die Antennenfeeds 161 und 163 oder die Antennenfeeds 164 und 165. Dementsprechend genügt es, je nach der gewählten Einbaulage entweder die Antennenfeeds 161 und 163 oder die Antennenfeeds 164 und 165 mit weiteren Signalverarbeitungsschaltkreisen des Radarsensors zu verbinden. Die jeweils anderen beiden Antennenfeeds verbleiben im einfachsten Fall ohne jegliche weitere Kontaktierung. Dies ist bei einer Verwendung von Patchantennen als Antennenfeeds jedoch kein Nachteil, da bei der Herstellung zusätzlicher Antennenfeeds keine zusätzlichen Kosten anfallen. Lediglich das Layout der herzustellenden Trägerplatine muß entsprechend angepaßt werden.

Die Auswahl jeweils eines der beiden alternativ zueinander verwendeten Antennenfeeds 161 und 165 bzw. 163 und 164 erfolgt an Verbindungsstellen 17, die nur schematisch angedeutet sind. Herstellungstechnisch kann die Auswahl beziehungsweise die Verbindung auf unterschiedliche Weise realisiert werden. Eine erste Möglichkeit, die in Figur 2 näherungsweise dargestellt ist, besteht darin, im Layout der Platine, die die Antennenfeeds beinhaltet, Stichleitungen zu den beiden alternativ verwendeten Antennenfeeds 161, 165 und 163, 164 sowie zu den Sende/Empfangsweichen 12 vorzusehen. Die Stichleitungen sind an Verbindungsstellen 17 nah zueinander geführt, berühren sich jedoch nicht. Das jeweils ausgewählte Antennenfeed wird in einem letzten Herstellungsprozeß mit der Stichleitung zur Sende/Empfangsweiche 12 verbunden werden. Dies kann beispielsweise durch Bonden geschehen. Eine alternative Möglichkeit ist, das Layout der Trägerplatine, die die Antennenfeeds beinhaltet, so zu gestalten, daß die alternativ zueinander verwendbaren Antennenfeeds 161, 165 und 163, 164 jeweils beide mit den nachfolgenden Sende/Empfangsweichen 12 verbunden sind. Die Auswahl des jeweils tatsächlich verwendeten Antennenfeeds erfolgt dann dadurch, daß in einem letzten Herstellungsschritt das jeweils nicht benötigte Antennenfeed durch ein mechanisches Durchtrennen der Verbindungsleitung zu den Sende/Empfangsweichen 12 isoliert wird. Eine dritte, Möglichkeit, die es erlaubt, auch während des Betriebs des Radarsensors zwischen den alternativ vorhandenen Antennenfeeds zu wählen, ist, an jeder Verbindungsstelle 17 einen Schalter vorzusehen. Dies könnten beispielsweise hochfrequenztaugliche PIN-Dioden-Schalter sein.

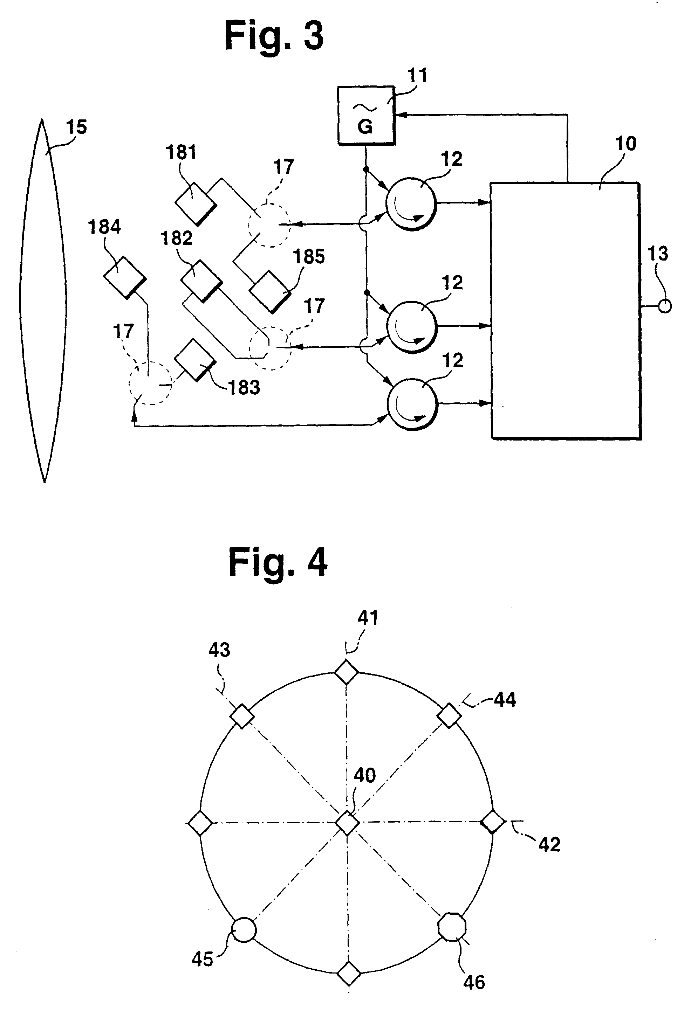

Ein Nachteil bei dem erfindungsgemäßen Radarsensor gemäß Figur 2 ist jedoch unter Umständen, daß sich, je nach dem welche Reihe von Antennenfeeds auswählt wird, die Polarisationsrichtung der verwendeten Radarwellen ändert. Im hier vorliegenden Beispiel wäre die Polarisationsrichtung im einen Fall 45° nach links geneigt, im anderen Fall 45° nach rechts geneigt. Diesen Nachteil vermeidet ein erfindungsgemäßer Radarsensor entsprechend dem Ausführungsbeispiel der Figur 3. Die Darstellung dieses erfindungsgemäßen Radarsensors beinhaltet wiederum die aus dem Stand der Technik bekannten Baugruppen Auswerte- und Steuereinrichtung 10, Schwingungserzeuger 11, Sende/Empfangsweichen 12, Antennenlinse 15 und Ausgang 13 der Auswerte- und Steuereinrichtung 10. Der Unterschied zu dem erfindungsgemäßen Radarsensor der Figur 2 liegt darin, daß die verwendeten Antennenfeeds in diesem Beispiel als quadratische Patchelemente ausgebildet sind. Die Polarisation der verwendeten Radarwelle wird in diesem Fall dadurch bestimmt, an welcher Seite eine Anschlußleitung das Patchelement erregt. Dementsprechend sind die Anschlußleitungen an die zueinander alternativ verwendeten Antennenfeeds 181 und 185 sowie 183 und 184 an verschiedenen Seiten vorgesehen. Die Auswahl der jeweils verwendeten Antennenfeeds geschieht auf dieselbe Weise wie zu Figur 2 beschrieben. Neu ist hier jedoch, daß das mittlere Antennenfeed 182 zwei Zuführungsleitungen besitzt, die in Abhängigkeit der gewählten Reihe von Antennenfeeds alternativ zueinander kontaktiert werden. Durch die quadratische Ausgestaltung der Patchelemente sowie die alternativ zueinander wählbare Zuführung bei dem Antennenfeed 182 ist es möglich, in beiden zur Auswahl stehenden Einbaulagen eine Polarisation von 45° nach links geneigt zu erzeugen.

Figur 4 zeigt eine Draufsicht auf eine mögliche Anordnung von Antennenfeeds gemäß einem weiteren Ausführungsbeispiel. Dabei sind, um die Zahl der zur Alternative stehenden Einbaulagen zu erhöhen, weitere nutzbare Antennenfeeds vorgesehen. Gezeigt sind insgesamt neun Antennenfeeds, die entlang von 4 Geraden 41, 42, 43 und 44 angeordnet sind. Sie bilden vier, alternativ zur Auswahl stehende Reihen von Antennenfeeds. Das Antennenfeed 40 liegt wiederum, gemäß der schon erwähnten vorteilhaften Ausgestaltung der Erfindung, auf einem angenommenen Drehpunkt M. Durch eine Drehung um diesen angenommenen Drehpunkt M läßt sich jede der Reihen von Antennenfeeds auf eine jeweils andere Reihe kongruent abbilden. Ein Radarsensor mit einer solchen Anordnung von Antennenfeeds kann in insgesamt vier verschiedenen Einbaulagen montiert werden, die jeweils um 45° gedreht zueinander liegen. Wird darüber hinaus beispielsweise im Rahmen der Signalverarbeitung berücksichtigt, daß gegebenenfalls ein rechtes und ein linkes Antennenfeed spiegelbildlich vertauscht werden, stehen insgesamt sogar acht unterschiedliche Einbaulagen zur Auswahl. Um weitere alternative Ausgestaltungen der Erfindung darzustellen, sind ein Antennenfeed 45 kreisförmig und ein Antennenfeed 46 achteckig dargestellt. Diese Formgebung oder auch andere, gegebenenfalls empirisch ermittelte Formen sind unter Umständen notwendig, um auch bei dieser Anzahl von Alternativen eine jeweils gleiche Polarisationsrichtung zu gewährleisten.

Die beschriebenen Ausführungsbeispiele stellen die bevorzugte Ausgestaltung der Erfindung dar. Gleichwohl ist es jedoch denkbar, daß die alternativ zueinander verwendeten Antennenfeeds entlang zweier Geraden verlaufen, die unter einem beliebig wählbaren Winkel zueinander stehen. Dabei ist es nicht unbedingt notwendig, daß ein Antennenfeed Bestandteil mehrerer Reihen von Antennenfeeds ist. Im letztgenannten Fall läge keins der Antennenfeeds auf einem für eine kongruente Abbildung anzunehmenden Drehpunkt. Wird für die Auswahl der jeweils alternativ zueinander genutzten Antennenfeeds ein Schalter verwendet, besteht natürlich die Möglichkeit, auch im Betrieb des Radarsensors zwischen den unterschiedlichen Antennenfeeds hin- und herzuschalten. Dies kann bei einer Verwendung des Radarsensors an einem Kraftfahrzeug besonders vorteilhaft für eine vertikale Justierung des Radarsensors genutzt werden, indem eine von dem Radarsensor dann bestimmbare vertikale Winkellage eines Radarziels mit einem Sollwert verglichen wird.

## Patentansprüche

1. Kraftfahrzeug-Radarsensor mit einer Antennenanordnung, bestehend aus einem fokussierenden Mittel (15) und mindestens zwei ersten Antennenfeeds (161-163; 181-183), die entlang einer ersten Geraden (20) angeordnet sind und eine erste Reihe von Antennenfeeds bilden, **dadurch gekennzeichnet, daß** mindestens ein weiteres Antennenfeed (164, 165; 184, 185) vorhanden ist, das so angeordnet ist, daß entlang einer weiteren Geraden (21) mindestens eine weitere Reihe von Antennenfeeds gebildet wird, wobei
- die Geraden (20, 21) unter einem beliebig wählbaren festen Winkel zueinander stehen und
- die weitere Reihe durch eine Drehung um einen angenommenen Drehpunkt (M) kongruent auf die erste Reihe abbildbar ist.

2. Kraftfahrzeug-Radarsensor nach Anspruch 1, **dadurch gekennzeichnet, daß** alle Antennenfeeds auf einer gemeinsamen Trägerplatine angeordnet sind.

3. Kraftfahrzeug-Radarsensor nach Anspruch 1, **dadurch gekennzeichnet, daß** ein Antennenfeed der ersten Reihe (162,182,40) auch Bestandteil jeder weiteren Reihe von Antennenfeeds ist und dementsprechend den anzunehmenden Drehpunkt für die kongruente Abbildung der weiteren Reihen auf die erste Reihe darstellt.

4. Kraftfahrzeug-Radarsensor nach Anspruch 3, **dadurch gekennzeichnet, daß** jede Reihe eine ungerade Anzahl von mindestens drei Antennenfeeds besitzt und daß das Antennenfeed (162,182,40), das den angenommenen Drehpunkt darstellt, das mittlere Antennenelement jeder Reihe ist.

5. Kraftfahrzeug-Radarsensor nach Anspruch 1, **dadurch gekennzeichnet, daß** mindestens eine der weiteren Reihen von Antennenfeeds entlang einer Geraden (42) angeordnet ist, die senkrecht zu der ersten Geraden (41) verläuft.

6. Kraftfahrzeug-Radarsensor nach Anspruch 5, **dadurch gekennzeichnet, daß** mindestens eine der weiteren Reihen von Antennenfeeds entlang einer Geraden (43) angeordnet ist, die unter einem Winkel von 45° zu der ersten Geraden (41) verläuft.

7. Kraftfahrzeug-Radarsensor nach Anspruch 1, **dadurch gekennzeichnet, daß** die Antennenfeeds nur einer Reihe mit Signalverarbeitungsschaltkreisen des Radarsensors elektrisch verbunden sind.

8. Kraftfahrzeug-Radarsensor nach Anspruch 7, **dadurch gekennzeichnet, daß** die genannten Antennenfeeds mit den Signalverarbeitungsschaltkreisen des Radarsensors durch Bonden an Verbindungsstellen (17) elektrisch verbunden sind.

9. Kraftfahrzeug-Radarsensor nach Anspruch 7, **dadurch gekennzeichnet, daß** die Antennenfeeds der anderen Reihen durch ein Unterbrechen von ursprünglich vorhandenen Leitungsverbindungen von den Signalverarbeitungsschaltkreisen des Radarsensors getrennt sind.

10. Kraftfahrzeug-Radarsensor nach Anspruch 1, **dadurch gekennzeichnet, daß** an den Verbindungsstellen (17) Schalter vorhanden sind, mit denen Antennenfeeds verschiedener Reihen wechselweise mit den Signalverarbeitungsschaltkreisen des Radarsensors verbindbar sind.

11. Kraftfahrzeug-Radarsensor nach Anspruch 1, **dadurch gekennzeichnet, daß** die einzelnen Antennenfeeds eine quadratische (40), achteckige (46) oder kreisförmige (45) Apertur haben.

## Claims

1. Motor-vehicle radar sensor having an antenna arrangement composed of a focusing means (15) and at least two first antenna feeds (161-163; 181-183) which are arranged along a first straight line (20) and form a first row of antenna feeds, **characterized in that** there is at least one further antenna feed (164, 165; 184, 185) which is arranged in such a way that at least a further row of antenna feeds is formed along a further straight line (21), where
- the straight lines (20, 21) are at a fixed angle with respect to one another, which angle can be selected as desired, and
- the further row can be mapped congruently onto the first row by rotation about an assumed centre of rotation (M).

2. Motor-vehicle radar sensor according to Claim 1, **characterized in that** all the antenna feeds are arranged on a common motherboard.

3. Motor-vehicle radar sensor according to Claim 1, **characterized in that** an antenna feed of the first row (162, 182, 40) is also a component of each further row of antenna feeds and accordingly constitutes the centre of rotation to be assumed for the congruent mapping of the further rows onto the first row.

4. Motor-vehicle radar sensor according to Claim 3,
**characterized in that** each row has an uneven number of at least three antenna feeds, and **in that** the antenna feed (162, 182, 40) which constitutes the assumed centre of rotation is the central antenna element of each row.

5. Motor-vehicle radar sensor according to Claim 1, **characterized in that** at least one of the further rows of antenna feeds is arranged along a straight line (42) which runs perpendicularly with respect to the first straight line (41).

6. Motor-vehicle radar sensor according to Claim 5, **characterized in that** at least one of the further rows of antenna feeds is arranged along a straight line (43) which runs at an angle of 45° with respect to the first straight line (41).

7. Motor-vehicle radar sensor according to Claim 1, **characterized in that** the antenna feeds of just one row are electrically connected to signal-processing circuits of the radar sensor.

8. Motor-vehicle radar sensor according to Claim 7, **characterized in that** the aforesaid antenna feeds are electrically connected to the signal-processing circuits of the radar sensor by bonding at connecting points (17).

9. Motor-vehicle radar sensor according to Claim 7, **characterized in that** the antenna feeds of the other rows are separated from the signal-processing circuits of the radar sensor by interrupting line connections which are originally present.

10. Motor-vehicle radar sensor according to Claim 1, **characterized in that** switches with which antenna feeds of different rows can be connected alternately to the signal-processing circuits of the radar sensor are present at the connecting points (17).

11. Motor-vehicle radar sensor according to Claim 1, **characterized in that** the individual antenna feeds have a square aperture (40), octagonal aperture (46) or circular aperture (45).

## Revendications

1. Capteur radar de véhicule automobile comportant une disposition d'antennes formée d'un moyen de focalisation (15) et d'au moins deux premières alimentations d'antennes (161-163; 181-183), réparties le long d'une première droite (20) et formant une première rangée d'alimentations d'antennes,
**caractérisé en ce qu'**
il comporte au moins une autre alimentation d'antenne (164, 165 ; 184. 185) installée de façon à former au moins une autre rangée d'alimentations d'antennes le long d'une autre droite (21), et
- les droites (20, 21) font entre elles un angle fixe choisi de manière quelconque, et
- l'autre rangée se copie de manière congruente sur la première rangée par rotation autour d'un point de rotation (M).

2. Capteur radar de véhicule automobile selon la revendication 1,
**caractérisé en ce que**
toutes les alimentations d'antennes sont installées sur une platine de support commune.

3. Capteur radar de véhicule automobile selon la revendication 1,
**caractérisé en ce qu'**
une alimentation d'antenne de la première rangée (162, 182, 40) fait également partie d'une autre rangée d'alimentations d'antennes et constitue ainsi le point de rotation pour former une image congruente de l'autre rangée sur la première rangée.

4. Capteur radar de véhicule automobile selon la revendication 3,
**caractérisé en ce que**
chaque rangée comporte un nombre impair d'au moins trois alimentations d'antennes et l'alimentation d'antenne (162, 182, 40) qui constitue le point de rotation est l'élément d'antenne central de chaque rangée.

5. Capteur radar de véhicule automobile selon la revendication 1,
**caractérisé en ce qu'**
au moins l'une des autres rangées d'alimentations d'antennes est installée le long d'une droite (42) perpendiculaire à la première droite (41).

6. Capteur radar de véhicule automobile selon la revendication 5,
**caractérisé en ce qu'**
au moins l'une des autres rangées d'alimentations d'antennes est prévue le long d'une droite (43) qui fait un angle de 45° par rapport à la première droite (41).

7. Capteur radar de véhicule automobile selon la revendication 1,
**caractérisé en ce que**
les alimentations d'antennes d'une rangée seulement sont reliées électriquement aux circuits de traitement de signal du capteur radar.

8. Capteur radar de véhicule automobile selon la revendication 7,
**caractérisé en ce que**
les alimentations d'antennes sont reliées aux circuits de traitement de signal du capteur d'antenne, électriquement par soudage au point de liaison (17).

9. Capteur radar selon la revendication 7,
**caractérisé en ce que**
les alimentations d'antennes des autres rangées sont coupées des circuits de traitement de signal du capteur radar par l'interruption des liaisons conductrices existant à l'origine.

10. Capteur radar selon la revendication 1,
**caractérisé en ce qu'**
au point de liaison (17) des commutateurs permettent de relier des alimentations d'antennes de différentes rangées, alternativement avec les circuits de traitement de signal du capteur radar.

11. Capteur radar selon la revendication 1,
**caractérisé en ce que**
les différentes alimentations d'antennes ont une ouverture carrée (40), octogonale (46) ou circulaire (45).
